(19) Europäisches Patentamt
European Patent Office
Office européen des brevets

(11) Publication number : **0 402 026 B1**

# (12) EUROPEAN PATENT SPECIFICATION

(45) Date of publication of patent specification :
**13.07.94 Bulletin 94/28**

(51) Int. Cl.⁵ : **C09C 1/22,** C09C 1/00, C01G 49/00

(21) Application number : **90305788.3**

(22) Date of filing : **29.05.90**

(54) **Black pigment particles.**

(30) Priority : **30.05.89 JP 137751/89**

(43) Date of publication of application :
**12.12.90 Bulletin 90/50**

(45) Publication of the grant of the patent :
**13.07.94 Bulletin 94/28**

(84) Designated Contracting States :
**DE FR GB NL**

(73) Proprietor : **TODA KOGYO CORP.**
**7-1 Yokogawa-Shinmachi**
**Nishi-ku**
**Hiroshima-shi Hiroshima-ken (JP)**

(72) Inventor : **Katamoto, Tsutomu**
**5-14-20-2 Itsukaichi-Chuo,**
**Saeki-ku**
**Hiroshima-shi, Hiroshima-ken (JP)**

(74) Representative : **Woods, Geoffrey Corlett et al**
**J.A. KEMP & CO.**
**14 South Square**
**Gray's Inn**
**London WC1R 5LX (GB)**

**Description**

The present invention relates to black pigment particles which are non-magnetic, safe and harmless, and which have excellent workability and heat resistance.

The black pigment particles of the present invention are particularly useful for use or, for example, a developing toner, colouring materials for paint or colouring materials for resins.

Generally black pigment particles are widely used as a developing toner by mixing and dispersing the pigment particles in a resin and then molding the resin, or as coating materials by mixing and dispersing the pigment particles in a vehicle.

Recently black pigment particles which are non-magnetic, safe and harmless, and which also have excellent workability and heat resistance have been strongly demanded from the standpoints of enhancement of working efficiency in the age of energy saving, safety and sanitation, and improvement of properties.

To improve the workability of the pigment particles, it is imperative that the pigment particles are non-magnetic and have good dispersibility with an appropriate range of size, and are offered in the form of powder which is easy to handle by possessing a high apparent density and an appropriate range of size.

Heat resistance is also a requisite for the black pigment particles because these particles, when used for a developing toner, are required to have a stable hue even at high temperatures above 150°C, since the developing toner, for which demand is growing with the spread of copying devices in recent years, is heated to a high temperature over 150°C in its production process.

Hitherto, magnetite particles and carbon black particles have been popularly used as black pigment particles.

Black pigment particles which are non-magnetic, safe and harmless, and which also have excellent workability and heat resistance are now most acutely required. Known magnetite particles, because of their magnetism, tend to repeat mutual agglomeration which deteriorates their dispersibility, resulting in poor workability. Furthermore magnetite particles begin to transform into maghemite particles at a temperature above 150°C and are change in colour from black to liver brown. They therefore have unsatisfactory heat resistance. On the other hand, a carbon black, although having excellent heat resistance, is hard to handle and has poor workability because it is a powder comprising ultra-fine particles with a size of 0.01 to 0.1 $\mu$m while having a high apparent density of around 0.1 g/cm$^3$. Carbon black is also problematic in the aspect of safety and sanitation such as the carcinogenicity thereof.

The present inventors have found that polycrystalline particles having a mixed composition of $Fe_2TiO_5$ and $Fe_2O_3 \cdot Fe_2TiO_3$ solid solution, obtainable by subjecting magnetite particles having their surfaces coated with a titanium compound, a mixture of magnetite particles and a titanium compound, or reduced particles obtained by reducing hematite particles having their surfaces coated with a titanium compound, to heat treatment at a temperature of not less than 700°C is a non-oxidizing atmosphere, and pulverizing the thus treated particles, are non-magnetic, safe and harmless, and have excellent a workability and heat resistance.

Accordingly the present invention provides black pigment particles comprising polycrystalline particles having a mixed composition of $Fe_2TiO_5$ and $Fe_2O_3$-$FeTiO_3$ solid solution, the $Fe_2TiO_5$ being present in an amount of 1 to 40 wt%, and the Ti being present in the polycrystalline particles in an amount of 15 to 50 atom% based on the total amount of Fe(II) and Fe(III).

The present invention also provides a process for the preparation of black pigment particles as defined above, which process comprises subjecting:

(a) magnetite particles having their surfaces coated with a titanium compound,

(b) a mixture of magnetite particles and a titanium compound, or

(c) particles obtainable by reducing hematite particles having their surfaces coated with a titanium compound,

to heat treatment at a temperature of not less than 700°C in a non-oxidising atmosphere and pulverising the particles thus obtained.

The present invention additionally provides a developing toner comprising a resin and particles as defined above having an average particle size of from 0.1 to 0.5$\mu$m.

The present invention further provides a coating material, for example a paint, comprising a vehicle and particles as defined above.

Each particle is composed of both $Fe_2TiO_5$ and $Fe_2O_3$-$FeTiO_3$ solid solution.

In the accompanying drawings:

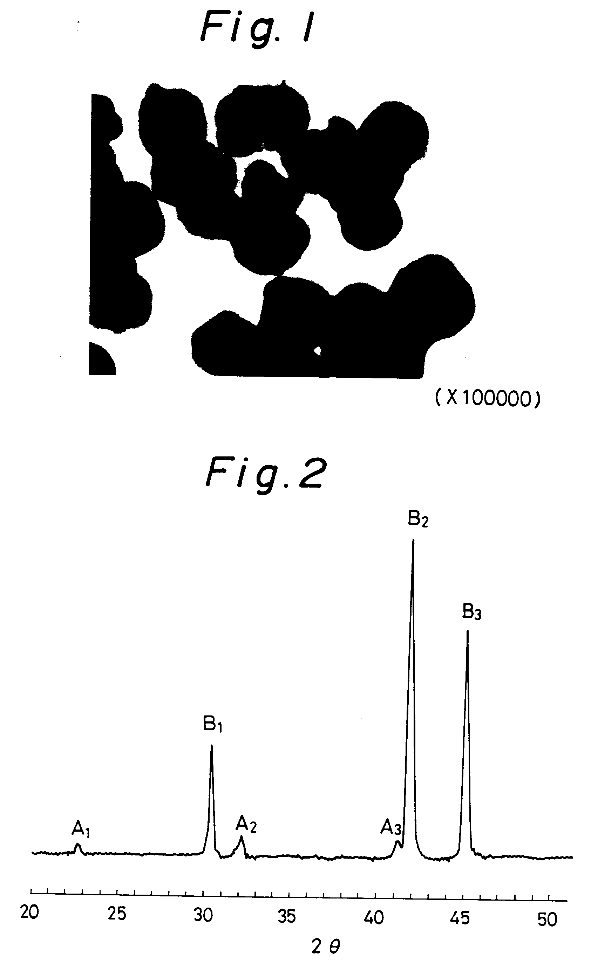

Fig. 1 and Fig. 2 are an electron micrograph (x100,000) showing the structure of a black pigment particle of the present invention and an X-ray diffraction pattern of the particle, respectively.

The lightness L* of the black pigment particles of the present invention is 18 to 25, preferably 18 to 23, and the chroma $C*ab = \sqrt{a*^2 + b*^2}$ is 0.2 to 4.0, preferably 0.2 to 2.0 (wherein L*, a* and b* are the values indicated by the (L*, a*, b*) uniform sensory colour space of CIE 1976).

The black pigment particles of the present invention have a magnetization of about 0.5 to 5.0 emu/g, preferably 0.5 to 2.0 emu/g, and are almost non-magnetic.

The pigment particles of the present invention also have an apparent density of 0.5 to 1.2 $g/cm^3$, preferably 0.6 to 1.1 $g/cm^3$.

The size of the polycrystalline particles of the present invention is 0.05 to 2.0 $\mu$m, preferably 0.1 to 1.0 $\mu$m. When the particles of the present invention are used as colouring pigment particles for developing toner, it is preferable that the particles have an average size of 0.1 to 0.5 $\mu$m, considering facilitation of mixing and dispersion of the particles in resins.

The polycrystalline particles having a mixed composition of $Fe_2TiO_5$ and $Fe_2O_3$-$FeTiO_3$ solid solution of the present invention are black in colour, non-magnetic, safe and harmless, easy to handle owing to an appropriate particle size and a high apparent density, and also have excellent heat resistance.

The particle size of toner generally used at present is about 10 $\mu$m. There is, however, a tendency to decrease the particle size in conformity to enhance the performance of toner. This is is causing a complaint that the toner particles obtained by using carbon black with a low apparent density are hard to classify in the toner production process because of the small specific gravity thereof. The black pigment particles comprising polycrystalline particles of the present invention are free of such a problem because the toner particles obtained by using the said black pigment particles have a sufficiently large specific gravity owing to a high apparent density, for example 4.0 to 5.5 $g/cm^3$, and are therefore easy to classify.

The black pigment particles according to the present invention have excellent heat resistance. The colour thereof is scarcely changed even when they are exposed to a high temperature such as about 300°C.

The black pigment particles of the present invention can be obtained by subjecting magnetite ($\underline{FeO_x}$.$FE_2O_3$, wherein $0.5 \leqq x \leqq 1$) particles having their surfaces coated with a titanium compound, a mixture of the magnetite particles and a titanium compound, or reduced particles obtainable by reducing hematite particles having their surface coated with a titanium compound, to heat treatment at a temperature of not less than 700°C in a non-oxidizing atmosphere, and pulverizing the particles thus obtained. Use of magnetite particles coated with a titanium compound as a starting material is preferred because it is easy to obtain the particles with low magnetization and such particles are essentially non-magnetic.

The magnetite particles or hematite particles may be of any shape, for example granular, spherical or acicular. The size of the particles is from about 0.03 to 1.5 $\mu$m.

There is correlation between the size of the starting particles and that of the product particles. Normally when using starting particles with a small size, the product particles are also small, and when using starting particles of a large size, there are obtained product particles of a large size.

As the titanium compound coated on or mixed with the starting particles, there can be used hydrous oxides, hydroxides and oxides of titanium. When a titanium compound is mixed with magnetite particles, it is preferred to use a water-soluble titanium compound. The amount of titanium compound used in the particle preparation is 15.0 to 50.0 atom%, preferably 20 to 40 atom%, calculated as Ti, based on Fe(II) and Fe(III) in the magnetite particles. When less than 15.0 atom%, calculated as Ti, based on Fe(II) and Fe(III), is used the magnetization of the obtained black pigment particle increases. When more than 50.0 atom%, calculated as Ti, based on Fe(II) and Fe(III), is used though the desired non-magnetic black pigment particle can be obtained, no extra effect can be obtained.

$N_2$ gas can, for example, be used as a non-oxidizing atmosphere in the heat treatment. When the atmosphere is oxidizing, the objective black pigment particles cannot be obtained.

The amount of Ti in the polycrystalline particles of the present invention is 15 to 50 atom%, preferably 20 to 40 atom%, based on the total amount of Fe(II) and Fe(III) therein.

The temperature for the heat-treatment is not less than 700°C, and is preferably 720 to 800°C. When the heat-treatment temperature is below 700°C, there is insufficient solid-phase reaction between the iron oxide and the titanium compound, and the desired black pigment particles cannot be obtained.

Pulverization of the obtained particles can be accomplished by using a commonly employed pulverizer such as a ball mill, attritor or vibration mill.

In the above process, the starting particles may be coated with a known sintering inhibitor before being subjected to the heat-treatment. In this case, sintering of the particle and between the particles in the heat-treatment is prevented, thereby obtaining black pigment particles having good dispersibility. A compound composed of at least one element selected from Al, Ti, Si, Zr and P and which does not impair the normal properties of the black pigment particles produced can be used as the sintering inhibitor. The amount of the sintering inhibitor element used in the present invention is 0.1 to 15.0 atom%, preferably 0.1 to 5.0 atom%, based on the amount of Fe and Ti. To obtain a satisfactory sintering inhibitive effect, it is preferable to add the sintering inhibitor in an amount of not less than 0.1 atom%. When its amount exceeds 15.0 atom%, magnetite is mixed in the produced black pigment particles, and as a result it is difficult to obtain the desired non-magnetic black pigment particles.

The black pigment particles of the present invention suffer a decrease in lightness L* of not more than 3.0 and an increase in chroma C* of not more than 1.0 after the heat-treatment. These results demonstrate that the pigment particles remain almost free of colour change from black and have excellent heat resistance.

The black pigment particles of the present invention are easy to handle and have excellent workability owing to their high apparent density,which is 0.5 to 1.2 g/cm³. Moreover, the pigment particles of the present invention are free of re-agglomeration and have good dispersibility as their magnetization is as low as 0.5 to 5.0 emu/g.

As described above, the black pigment particles of the present invention are non-magnetic, safe and harmless, and also have excellent workability and heat resistance. Consequently they can be advantageously used as, for example, a developing toner, colouring material for paint or colouring material for coating resins.

## Examples

The present invention is now further described in the following Examples.

The average sizes of the particles shown in the following Examples and Comparative Examples are the average of the values determined from electron micrographs.

The magnetization of the particles shown below are the ones determined in a magnetic field of 10 KOe.

The ratio between $Fe_2TiO_5$ and $Fe_2O_3$-$FeTiO_3$ solid solution was shown by the value of strength ratio of main peaks on an X-ray spectrum commonly used as an index showing the existing proportions (by volume).

For the L* value (lightness), a* value and b* value, the colour of each test sample was measured for L*, a* and b* by Hunter's Lab space by using amulti-light-source spectrocolorimeter MSC-IS-2D (mfd. by Suga Testing Machines Mfd. Co., Ltd.) and they (L*, a* and b*) were shown by the values indicated according to (L*, a*, b*) uniform sensory colour space of CIF 1976.

Each test sample was prepared by kneading together 0.5 g of black pigment particles and 1.0 cm³ of castor oil by a Hoover muller to form a paste-like substance, then adding thereto 4.5 g of a clear lacquer, kneading them to form a coating material, and applying this coating material on a cast coated paper sheet by a 150μm (6-mil) applicator.

## Example 1

100 g of granular magnetite particles having an average particle size of 0.2 μm and a magnetization of 85.0 emu/g were mixed and dispersed in an aqueous solution containing 0.26 mol of $TiOSO_4$ (Ti/Fe = 20.0 atom%). This suspension was neutralized by adding NaOH, a hydroxide of Ti was deposited on the particle surfaces by adjusting the pH to 8, and then the obtained particles were filtered and dried. Fluorescent X-ray analysis of the obtained magnetite particles showed that they had their surfaces coated with a hydroxide of Ti and the amount of Ti(IV) in the magnetite particle was 21.0 atom% based on the sum of Fe(II) and Fe(III).

50 g of the granular magnetite particles thus obtained were heat-treated at 750°C under an $N_2$ gas stream for 120 minutes and then pulverized to obtain fine black particles.

The black particles thus obtained had an average particle size of 0.25 μm as shown in the electron micrograph (x100,000) of Fig. 1 and were composed of a mixed composition of $Fe_2TiO_5$ and $Fe_2O_3$-$FeTiO_3$ solid solution as shown in the X-ray diffraction pattern of Fig. 2. In the diffraction pattern, peak A denotes $Fe_2TiO_5$ and peak B denotes $Fe_2O_3$-$FeTiO_3$ solid solution.

The ratio of $Fe_2TiO_5$ to $Fe_2O_3$-$FeTiO_3$ solid solution, as determined by measuring the strength ratio of their respective main peaks $A_2$ and main X-ray peaks $B_2$, was 0.09 : 1.

The black particles also had a lightness (L*) of 24.5, a chroma ($C^*ab = \sqrt{a^{*2} + b^{*2}}$)of 1.0, an apparent density of 0.8 g/cm³ and a magnetization of 0.6 emu/g.

2.0 g of these black particles were further heat-treated at 300°C in air for 60 minutes. The resulting product had a lightness L* of 21.7 and a chroma $C^*ab = \sqrt{a^{*2} + b^{*2}}$ of 1.9, both of which were little different from those before the heat-treatment.

## Examples 2, 4 and 5

Black pigment particles were obtained by following the same procedure as Example 1 except for changing the starting particles, the kind, amount and coating method of the Ti compound, the amount of urea, enforcement of the treatment with a sintering inhibitor, the kind and amount of the sintering inhibitor, and the temperature and time of the heat treatment.

The main producing conditions in the above Examples and the properties of the obtained products are shown in Table 1 and Table 2, respectively.

Example 3

100 g of the same granular magnetite particles as used in Example 1 were mixed and dispersed in an aqueous solution containing 0.45 mol of $TiOSO_4$ (Ti/Fe = 35.0 atom%). To the suspension was added 2.72 mol of urea, the mixture was kept at 95°C under stirring for 180 minutes to hydrolyze the $TiOSO_4$, thereby depositing a hydroxide of Ti on the particle surfaces, and then the thus obtained particles were filtered and dried. Fluorescent X-ray analysis of the obtained granular magnetite particles showed that they had their surfaces coated with a hydroxide of Ti and the amount of Ti(IV) in the particle was 37.0 atom% based on the sum of Fe (II) and Fe(III).

50 g of the thus obtained granular magnetite particles coated with a hydroxide of Ti on the surfaces thereof were immersed in an aqueous solution containing 0.009 mol of $Al_2(SO_4)_3$, thereby depositing a hydroxide of aluminium on the hydroxide of Ti on the particle surfaces. The thus obtained particles were heat treated at 750°C in an $N_2$ gas stream for 120 minutes and pulverized to obtain the black particles.

The main producing conditions in the above process and the properties of the obtained product are shown in Table 1 and Table 2, respectively.

Referential Example 1

The same granular magnetite particles (lightness L* = 16.9, chroma C* ab = 1.10) as used in Example 1 were subjected to a heat resistance test in the same way as Example 1. The magnetite particles after the heat treatment had a lightness (L*) of 35.3 and a chroma (C* ab = $\sqrt{a*^2 + b*^2}$ of 72.0, from which it is noted that the particles suffered a great colour variation in comparison with the particles before the heat-treatment, indicating poor heat resistance of these particles.

## Table 1

| | | Starting particles | | | Coating with Ti compound | | | |
|---|---|---|---|---|---|---|---|---|
| | | Type | Average size (μm) | Magneti- zation (emu/g) | Kind of Ti com- pound | Amount (atom%) | Method | Amount of urea (mol) |
| Example 1 | | Granular magnetite | 0.2 | 85 | $TiOSO_4$ | 20.0 | Neutrali- zation | - |
| | 2 | ditto | 0.2 | 85 | $TiCl_4$ | 30.0 | Neutrali- zation | - |
| | 3 | ditto | 0.2 | 85 | $TiOSO_4$ | 35.0 | Hydrolysis | 2.72 |
| | 4 | ditto | 0.1 | 82 | ditto | 25.0 | Neutrali- zation | - |
| | 5 | ditto | 0.5 | 88 | ditto | 33.0 | Hydrolysis | 2.56 |

## Table 1 (Cont'd)

| Sintering inhibitor | | Heat-treatment | |
|---|---|---|---|
| Kind | Amount (atom%) | Temp. (°C) | Time (min) |
| — | — | 750 | 120 |
| $ZrOCl_2$ | 2.0 | 770 | 60 |
| $Al_2(SO_4)_3$ | 3.0 | 750 | 120 |
| #3 water glass | 1.0 | 750 | 120 |
| #3 water glass<br>Sodium hexameta-phosphate | 1.0<br>1.0 | 750 | 120 |

## Table 2

|  | Produced black pigment particles | | | | |
| --- | --- | --- | --- | --- | --- |
|  | Average size (μm) | Apparent density (g/cm³) | Strength ratio of main peaks of Fe₂TiO₃ and solid solution | Ti/[Fe(II)+Fe(III)] (atom%) | Amount of sintering inhibitor (atom%) |
| Example 1 | 0.25 | 0.8 | 0.09 : 1 | 21.0 | — |
| 2 | 0.23 | 0.8 | 0.10 : 1 | 31.0 | Zr/(Fe+Ti) 2.0 |
| 3 | 0.23 | 0.8 | 0.11 : 1 | 37.0 | Al/(Fe+Ti) 2.9 |
| 4 | 0.14 | 0.7 | 0.07 : 1 | 25.0 | Si/(Fe+Ti) 1.0 |
| 5 | 0.70 | 0.9 | 0.10 : 1 | 35.0 | Si/(Fe+Ti) 1.0 P/(Fe+Ti) 1.0 |

Table 2 (Cont'd)

| Magnetization σs (emu/g) | Colour | | | |
|---|---|---|---|---|
| | Before heat-treatment | | After heat-treatment | |
| | Lightness L* | Chroma C* ab | Lightness L* | Chroma C* ab |
| 0.6 | 24.5 | 1.0 | 21.7 | 1.9 |
| 2.5 | 22.0 | 0.9 | 21.0 | 1.6 |
| 2.4 | 21.1 | 0.9 | 20.8 | 1.4 |
| 0.7 | 19.4 | 0.8 | 19.3 | 1.2 |
| 1.5 | 23.5 | 0.9 | 23.1 | 1.4 |

**Claims**

1. Black pigment particles comprising polycrystalline particles having a mixed composition of $Fe_2TiO_5$ and $Fe_2O_3$-$FeTiO_3$ solid solution, the $Fe_2TiO_5$ being present in an amount of 1 to 40 wt%, and the Ti being present in the polycrystalline particles in an amount of 15 to 50 atom% based on the total amount of Fe(II) and Fe(III).

2. Particles according to claim 1, which have an apparent density of from 0.6 to 1.1 $g/cm^3$.

3. Particles according to claim 1 or 2, which have a lightness of L* of from 18 to 23, a chroma C* of from 0.2 to 2.0 and a magnetization of from 0.5 to 2.0 $Am^2/kg$ (0.5 to 2.0 emu/g).

4. Particles according to any one of the preceding claims, wherein said polycrystalline particles have an average particle size of from 0.1 to 1.0 $\mu$m.

5. Particles according to any one of the preceding claims, wherein the amount of Ti in said polycrystalline particles is from 20 to 40 atom% based on the total amount of Fe(II) and Fe(III).

6. Particles according to any one of the preceding claims which have their surfaces coated with an oxide of at least one element selected from Al, Ti, Si, Zr and P.

7. A process for the preparation of black pigment particles as claimed in any one of the preceding claims, which process comprises subjecting:
   (a) magnetite particles having their surfaces coated with a titanium compound,
   (b) a mixture of magnetite prticles and a titanium compound, or
   (c) particles obtainable by reducing hematite particles having their surfaces coated with a titanium compound,
   to heat treatment at a temperature of not less than 700°C in a non-oxidising atmosphere and pulverising the particles thus obtained.

8. A developing toner comprising a resin and particles as claimed in any one of claims 1 to 6 having an average particle size of from 0.1 to 0.5 μm.

9. A coating material comprising a vehicle and particles as claimed in any one of claims 1 to 6.

10. A material according to claim 9, which is a paint.

**Patentansprüche**

1. Schwarze Pigmentpartikel, umfassend polykristalline Partikel mit einer Mischzusammensetzung aus $Fe_2TiO_5$ und einer festen Lösung aus $Fe_2O_3$-$FeTiO_3$, wobei das $Fe_2TiO_5$ in einer Menge von 1 bis 40 Gew.-% vorliegt und das Ti in den polykristallinen Partikeln in einer Menge von 15 bis 50 Atom%, bezogen auf die Gesamtmenge von Fe(II) und Fe(III), vorliegt.

2. Partikel gemäß Anspruch 1, die eine Schüttdichte von 0,6 bis 1,1 g/cm³ haben.

3. Partikel gemäß Anspruch 1 oder 2, die eine Helligkeit L* von 18 bis 23, einen Farbton C* von 0,2 bis 2,0 und eine Magnetisierung von 0,5 bis 2,0 Am²/kg (0,5 bis 2,0 emu/g) haben.

4. Partikel gemäß einem der vorhergehenden Ansprüche, dadurch **gekennzeichnet**, daß diese polykristallinen Partikel eine mittlere Partikelgröße von 0,1 bis 1,0 μm haben.

5. Partikel gemäß einem der vorhergehenden Ansprüche, dadurch **gekennzeichnet**, daß die Ti-Menge in diesen polykristallinen Partikeln 20 bis 40 Atom%, bezogen auf die Gesamtmenge von Fe(II) und Fe(III), beträgt.

6. Partikel gemäß einem der vorhergehenden Ansprüche, deren Oberflächen mit einem Oxid mindestens eines Elements ausgewählt aus Al, Ti, Si, Zr und P beschichtet sind.

7. Verfahren zur Herstellung von schwarzen Pigmentpartikeln gemäß einem der vorhergehenden Ansprüche, wobei das Verfahren umfaßt, daß man:
   (a) Magnetitpartikel, deren Oberflächen mit einer Titanverbindung beschichtet sind,
   (b) eine Mischung von Magnetitpartikeln und einer Titanverbindung oder
   (c) Partikel, erhältlich durch Reduktion von Hämatitpartikeln, deren Oberflächen mit einer Titanverbindung beschichtet sind,
   einer Hitzebehandlung bei einer Temperatur von nicht weniger als 700°C in einer nichtoxidierenden Atmosphäre unterwirft und die so erhaltenen Partikel pulverisiert.

8. Entwicklungstoner, umfassend ein Harz und Partikel gemäß einem der Ansprüche 1 bis 6 mit einer durchschnittlichen Partikelgröße von 0,1 bis 0,5 μm.

9. Überzugsmaterial, umfassend einen Träger und Partikel gemäß einem der Ansprüche 1 bis 6.

10. Ein Material gemäß Anspruch 9, das eine Farbe ist.

**Revendications**

1. Particules de pigment noir comprenant des particules polycristallines composées d'un mélange de $Fe_2TiO_5$ et d'une solution solide de $Fe_2O_3$-$FeTiO_3$, le $Fe_2TiO_5$ étant présent en quantité de 1 à 40% en poids, et le Ti étant présent dans les particules polycristallines en quantité de 15 à 50% en atomes rapportée à la quantité totale de Fe(II) et Fe(III).

2. Particules selon la revendication 1, qui ont une masse volumique non tassée de 0,6 à 1,1 g/cm³.

3. Particules selon la revendication 1 ou 2, qui ont une leucie L* allant de 18 à 23, une chromie C* allant de 0,2 à 2,0 et une aimantation allant de 0,5 à 2,0 Am²/kg (0,5 à 2,0 emu/g).

4. Particules selon l'une quelconque des revendications précédentes, dans lesquelles les dites particules cristallines ont une grosseur de particule moyenne allant de 0,1 à 1,0 micron.

5. Particules selon l'une quelconque des revendications précédentes, dans lesquelles la quantité de Ti dans les dites particules polycristallines est de 20 à 40% en atomes rapportée à la quantité totale de Fe(II) et Fe(III).

6. Particules selon l'une quelconque des revendications précédentes, dont les surfaces sont revêtues d'un oxyde d'au moins un élément choisi parmi Al, Ti, Si, Zr et P.

7. Un procédé pour la préparation de particules de pigment noir selon l'une quelconque des revendications précédentes, lequel procédé comprend un traitement thermique à une température non inférieure à 700°C en atmosphère non-oxydante:
   (a) des particules de magnétite dont les surfaces sont revêtues d'un composé de titane,
   (b) un mélange de particules de magnétite et d'un composé de titane, ou
   (c) des particules obtenues par réduction de particules d'hématite dont les surfaces sont revêtues d'un composé de titane, et à pulvériser les particules ainsi obtenues.

8. Un toner de développement comprenant une résine et des particules selon l'une quelconque des revendications 1 à 6 dont la grosseur de particule moyenne est de 0,1 à 0,5 micron.

9. Un matériau de revêtement comprenant un support et des particules selon l'une quelconque des revendications 1 à 6.

10. Un matériau selon la revendication 9, qui est une peinture.

# Fig. 1

( X 100000 )

# Fig. 2